# FASCICULE DE BREVET EUROPEEN

(11) **EP 3 023 669 B1**
(45) Date de publication et mention de la délivrance du brevet: **30.12.2020**
(21) Numéro de dépôt: 14306845.0
(22) Date de dépôt: 20.11.2014
(51) Int. Cl.: F16F 7/12, B64C 1/00, B64C 3/00, B64C 11/20, B64D 29/00

(54) **Dispositif d'absorption d'énergie cinétique et aéronef comportant un tel dispositif**
Absorptionsvorrichtung für kinetische Energie, und Luftfahrzeug, das eine solche Vorrichtung umfasst
Device for absorbing kinetic energy and aircraft comprising such a device

(43) Date de publication de la demande: 25.05.2016
(73) Titulaire: AIRBUS (SAS), 31700 Blagnac (FR)
(72) Inventeur: Petiot, Caroline, 91940 LES ULIS (FR); Mesnage, Didier, 92210 SAINT CLOUD (FR); Bermudez, Michel, 92150 SURESNES (FR)
(74) Mandataire: Gicquel, Olivier Yves Gérard

(56) Documents cités:
- EP-A2- 0 836 032
- DE-A1-102011 107 698
- FR-A- 1 243 618
- US-A- 3 466 733
- US-A- 6 136 406

## Description

### Domaine de l'invention

La présente invention vise un dispositif d'absorption d'énergie cinétique due à une charge exceptionnelle, un aéronef, un véhicule, un équipement et une installation comportant un tel dispositif. La présente invention s'applique au domaine des dispositifs soumis à des charges exceptionnelles, tels des impacts dynamiques de débris durs ou mous.

La présente invention s'applique notamment au domaine de l'aéronautique. Plus particulièrement, l'invention s'applique dans le domaine d'éléments constitutifs d'aéronefs, de véhicules, d'équipement ou d'installations soumis à des impacts de débris durs ou mous. Les éléments constitutifs d'aéronef peuvent être un élément du fuselage, une pale d'une hélice ou un mat de moteur d'avion, par exemple. Les éléments constitutifs des équipements peuvent être une pale d'éolienne par exemple.

### État de la technique

Les éléments soumis à des impacts dynamiques peuvent subir des chocs importants provoquant la rupture de ces éléments. Plus particulièrement, dans le cas d'aéronefs, des débris mous, tels des oiseaux ou des débris de pneu, ou durs tels que de la grêle, de la glace, de la roche par exemple peuvent endommager des éléments constitutifs, tels un élément du fuselage, une pale d'une hélice, un mat de moteur d'avion, par exemple. En effet, l'endommagement d'une pale d'un moteur peut entrainer une rupture partielle ou totale allant jusqu'au décrochement de la pale, provoquant une réaction en chaine allant jusqu'au crash de l'aéronef.

Notamment, les moteurs à hélices contrarotatives non carénées à motorisation arrière sont particulièrement exposés aux possibilités d'impacts dynamiques.

Il est donc important d'améliorer constamment le renforcement de la protection des éléments pouvant être soumis à des charges exceptionnelles contre de telles charges.

On connait dans l'art antérieur le document FR1243618A qui décrit un corps composite en matière mousse, le document DE102011107698A1 qui décrit un « Crashbox » pour l'absorption d'énergie d'impact, le document EP0836032A2 qui décrit un composant d'absorption d'énergie, le document US3466733 qui décrit un dispositif absorbeur de choc comprenant une plaque plane de métal ductile et une plaque ondulée de métal ductile enroulées sous tension autour d'un mandrin de manière à former une structure cylindrique enroulée en spirale et le document US6136406 qui décrit un élément structurel comprenant un chemin de charge primaire connecté en parallèle à un chemin de charge secondaire plus long au niveau d'une paire de noeuds communs.

### Objet de l'invention

La présente invention vise à remédier à tout ou partie de ces inconvénients.

À cet effet, selon un premier aspect, la présente invention vise un dispositif d'absorption d'énergie cinétique due à une charge exceptionnelle selon la revendication 1.

L'avantage de ces modes de réalisation est de réduire la vulnérabilité d'un élément lors d'une charge exceptionnelle, tel un impact dynamique, qui peut être rapide et avoir une incidence particulière. L'absorption de l'énergie cinétique de la charge exceptionnelle peut être une dissipation par rupture d'un élément de raideur, une dissipation par compression du noyau, une dissipation par déformation de l'enveloppe externe, une dissipation par frottement entre un élément de raideur et le noyau, ou une dissipation par frottement interne dans un élément de raideur.

Dans des modes de réalisation, le dispositif objet de la présente invention comporte un élément de diffusion de la charge exceptionnelle sur le noyau.

Ces modes de réalisation présentent l'avantage de diffuser la charge due à la charge exceptionnelle reçue par le dispositif afin d'atteindre au moins un élément de raideur dissipant l'énergie de la charge reçue par rupture, par exemple.

Un tel assemblage présente l'avantage d'avoir une grande capacité de dissipation d'énergie par rupture ou par déformation plastique.

Ces modes de réalisation présentent l'avantage d'avoir une grande capacité de dissipation d'énergie par rupture ou par déformation plastique.

Dans des modes de réalisation, au moins un élément de raideur comporte un matériau de liaison des fibres unidirectionnelles contenu dans l'enveloppe tressée.

Ces modes de réalisation présentent l'avantage d'avoir une meilleure résistance au flambement.

Dans des modes de réalisation, au moins une fibre d'au moins un élément de raideur est en matériau polymérisé durci.

L'avantage de ces modes de réalisation est d'avoir une plus grande raideur de l'élément de raideur.

Dans des modes de réalisation, au moins une partie d'au moins un élément de raideur est un tronc de cylindre.

L'avantage de ces modes de réalisation est d'avoir un élément de raideur dont la section est constante et donc les propriétés physiques de l'élément de raideur sont similaires pour chaque section.

Dans des modes de réalisation, au moins une partie d'au moins un élément de raideur est un tronc de cône.

Ces modes de réalisation présentent l'avantage de mieux maîtriser la rupture au moyen d'un déclenchement et d'un contrôle progressif des instabilités, tel la rupture de l'élément de raideur sur le tronc de cône et au-delà, par exemple. La forme de chaque élément de raideur intégré dans le noyau permet une distribution contrôlée des efforts de compression liés à la charge.

Dans des modes de réalisation, au moins un élément de raideur est intégré dans un relief concave comporté par le noyau.

L'avantage de ces modes de réalisation est de pouvoir contrôler le positionnement de l'élément de raideur dans le volume du noyau.

Dans des modes de réalisation, chaque élément de raideur est réparti équitablement par l'élément de répartition.

Une répartition équitable présente l'avantage d'avoir une capacité de dissipation d'énergie cinétique équitablement répartie sur le dispositif. L'effort transmis par chaque élément de raideur est réparti équitablement sur la face arrière du dispositif par l'élément de répartition pour obtenir une déformation ou rupture contrôlée.

Dans des modes de réalisation, le matériau de l'élément de répartition est compris dans le groupe comprenant :
- un alliage de titane,
- un alliage d'aluminium,
- un composite PBO (p-phenylène-2,6-benzobisoxazole),
- un composite Dyneema (marque déposée),
- un composite polyéthylène,
- un composite aramide,
- un composite verre ou,
- un autre composite.

Ces modes de réalisation présentent l'avantage d'être résistants à la corrosion, exception faite de l'alliage d'aluminium en présence de fibres de carbone. Chaque élément de raideur en alliage de titane dissipe l'énergie due à la charge exceptionnelle par déformation plastique.

Dans des modes de réalisation, le matériau de l'élément de diffusion est compris dans le groupe comprenant :
- un alliage de titane,
- un alliage d'aluminium,
- un composite PBO (p-phenylène-2,6-benzobisoxazole),
- un composite Dyneema (marque déposée),
- un composite polyéthylène,
- un composite aramide,
- un composite verre ou,
- un autre composite.

Ces modes de réalisation présentent l'avantage d'être résistants à la corrosion.

Selon un deuxième aspect, la présente invention vise un aéronef qui comporte un dispositif objet de la présente invention.

L'avantage de ces modes de réalisation est d'avoir par exemple un aéronef comportant des éléments, tels un élément du fuselage, une pale d'une hélice, un mat de moteur d'avion par exemple, particulièrement résistants aux impacts dynamiques de débris durs ou mous, tels des oiseaux, de la grêle, de la glace, de la roche, ou encore des morceaux de pneus par exemple.

Selon un troisième aspect, la présente invention vise un véhicule qui comporte un dispositif objet de la présente invention.

Les avantages, buts et caractéristiques particuliers du véhicule objet de la présente invention étant similaires à ceux du dispositif objet de la présente invention, ils ne seront pas rappelés ici.

Selon un quatrième aspect, la présente invention vise un équipement qui comporte un dispositif objet de la présente invention.

Les avantages, buts et caractéristiques particuliers de l'équipement objet de la présente invention étant similaires à ceux du dispositif objet de la présente invention, ils ne seront pas rappelés ici.

Selon un cinquième aspect, la présente invention vise une installation qui comporte un dispositif objet de la présente invention.

Les avantages, buts et caractéristiques particuliers de l'installation objet de la présente invention étant similaires à ceux du dispositif objet de la présente invention, ils ne seront pas rappelés ici.

### Brève description des figures

D'autres avantages, buts et caractéristiques particuliers de l'invention ressortiront de la description non-limitative qui suit d'au moins un mode de réalisation particulier d'un dispositif d'absorption d'énergie cinétique due à une charge exceptionnelle, d'un aéronef, d'un véhicule, d'un équipement et d'une installation comportant un tel dispositif, en regard des dessins annexés, dans lesquels :
- la figure 1 représente, schématiquement et en perspective, un premier mode de réalisation particulier d'un dispositif objet de la présente invention,
- la figure 2 représente, schématiquement et en perspective, un deuxième mode de réalisation particulier d'un dispositif objet de la présente invention,
- la figure 3 représente, schématiquement et en perspective, une partie d'un troisième mode de réalisation particulier d'un dispositif objet de la présente invention, et
- la figure 4 représente, schématiquement et en perspective, un premier mode de réalisation particulier d'un élément de raideur d'un dispositif objet de la présente invention,
- la figure 5 représente, schématiquement et en perspective, un premier mode de réalisation d'un aéronef objet de la présente invention,
- la figure 6 représente, schématiquement, un premier mode de réalisation d'un véhicule objet de la présente invention,
- la figure 7 représente, schématiquement, un premier mode de réalisation d'un équipement objet de la présente invention et
- la figure 8 représente, schématiquement, un premier mode de réalisation d'une installation objet de la présente invention.

### Description d'exemples de réalisation de l'invention

On note dès à présent que les figures ne sont pas à l'échelle.

La présente description est donnée à titre non-limitatif, chaque caractéristique d'un mode de réalisation pouvant être combinée à toute autre caractéristique de tout autre mode de réalisation de manière avantageuse.

On note que le terme « un » est utilisé au sens « au moins un ».

On note qu'une charge exceptionnelle est une charge due à un impact dynamique, par exemple.

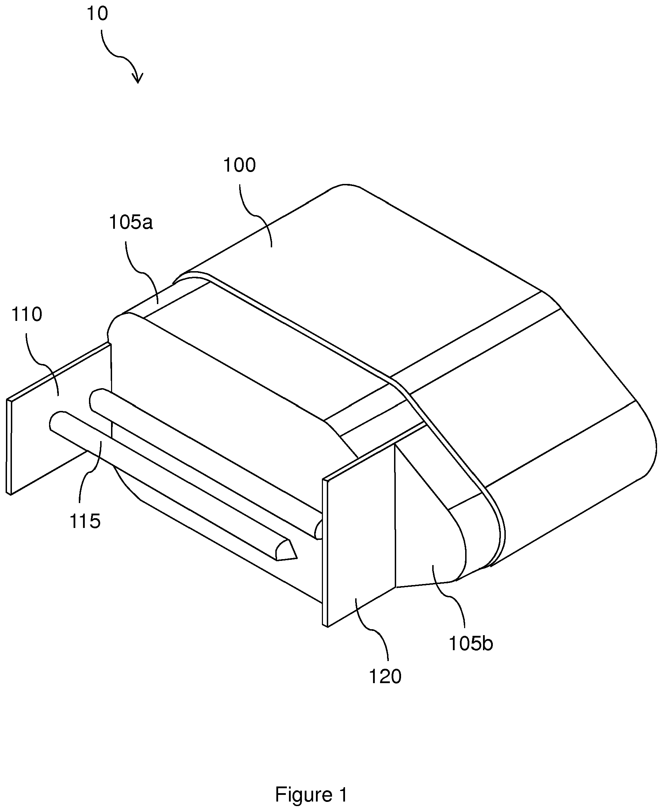

On observe sur la figure 1, un mode de réalisation 10 d'un dispositif objet de la présente invention.

Le dispositif 10 d'absorption d'énergie cinétique due à une charge exceptionnelle comporte :
- une enveloppe 100 externe configurée pour conserver une intégrité après la charge exceptionnelle,
- un noyau, 105a et 105b, en matériau compactable remplissant au moins partiellement l'enveloppe 100 externe, le matériau du noyau se compactant sous une charge exceptionnelle et absorbant une partie de l'énergie cinétique due à la charge,
- au moins un élément 115 de raideur intégré dans le noyau, 105a et 105b
- un élément 110 de répartition comportant chaque élément 115 de raideur et
- un élément 120 de diffusion de la charge exceptionnelle, sur le noyau, 105a et 105b.

Lors d'une charge exceptionnelle, l'enveloppe externe 100 se déforme sans perdre son intégrité. Le matériau de l'enveloppe externe 100 a un comportement déformable. Préférentiellement, l'enveloppe externe 100 constitue une tresse de fibres composites. Les fibres composites sont du carbone, de l'aramide, de la fibre PBO (poly-phénylène-2,6-benzobisoxazole), de la fibre polyéthylène, de la fibre Dyneema (marque déposée), de la fibre de verre ou un mélange de fibres composites, par exemple.

Le noyau, 105a et 105b, peut comporter plusieurs parties. Par exemple, le noyau, 105a et 105b, comporte une partie 105a en contact avec une face de l'élément 120 de diffusion et une partie 105b en contact avec une autre face 105b de l'élément 120 de diffusion. Le noyau, 105a et 105b, est compris dans l'enveloppe externe 100.

Le matériau du noyau, 105a et 105b, peut être :
- un matériau cellulaire,
- un matériau alvéolaire,
- une préforme fibreuse sèche,
- une préforme fibreuse partiellement imprégnée ou
- un matériau à plus faible résistance en compression que le matériau de l'enveloppe externe 100, par exemple.

Le matériau du noyau, 105a et 105b, peut être usinable ou mis en forme par moulage. Le matériau du noyau, 105a et 105b, peut avoir une densité variable. Chaque partie du noyau, 105a ou 105b, peut être en matériau différent.

Préférentiellement, chaque élément 115 de raideur est mis en position dans le noyau, 105a et 105b, qui maintien en position les éléments 115 de raideur.

Le noyau, 105a et 105b, peut comporter au moins un relief concave. Chaque relief concave correspond à un élément 115 de raideur.

Un élément 115 de raideur est préférentiellement un assemblage de fibres unidirectionnelles, maintenues par une enveloppe tressée. Dans des modes de réalisation, un élément 115 de raideur est un assemblage de clous en alliage de titane. Dans des modes de réalisation, l'assemblage de clous en alliage de titane d'un élément 115 de raideur est maintenu par une enveloppe tressée.

La direction des fibres est préférentiellement dans le sens de la direction la plus grande de l'élément 115 de raideur. Dans des modes de réalisation, la direction des clous est préférentiellement dans le sens de la direction la plus grande de l'élément 115 de raideur. Préférentiellement, une fibre d'au moins un élément 115 de raideur est en matériau polymérisé durci, tel du carbone pultrudé par exemple. Les fibres comportées dans un élément 115 de raideur peuvent être de natures différentes. L'enveloppe tressée est préférentiellement une tresse de fibres de carbone, la résistance mécanique en traction de la tresse est donc élevée. Dans des modes de réalisation, l'enveloppe tressée est imprégnée de résine.

Un élément 115 de raideur peut comporter un matériau de liaison des fibres unidirectionnelles contenu dans l'enveloppe. Le matériau de liaison peut être une résine ou une mousse, par exemple. Le matériau de liaison peut être injecté selon le procédé RTM (acronyme de « Resin Transfer Molding » en terminologie anglo-saxone). Le matériau de liaison diminue la raideur de l'élément 115 de raideur et augmente la résistance au flambement lors d'une compression de l'élément 115 de raideur.

L'enveloppe tressée de l'élément 115 de raideur stabilise les fibres unidirectionnelles et résiste au flambement de l'élément 115 de raideur. Les fibres unidirectionnelles sont préférentiellement juxtaposées. La section des fibres est polygonale, circulaire ou ovoïde, par exemple. L'assemblage des fibres unidirectionnels de l'élément 115 de raideur peut être réalisé avec ou sans polymérisation.

Un élément 115 de raideur comporte au moins une partie en tronc de cylindre. On rappelle qu'un cylindre est une surface dans l'espace définie par une droite, appelée génératrice, passant par un point variable décrivant une courbe plane fermée, appelée courbe directrice, et gardant une direction fixe.

Préférentiellement, la courbe directrice du tronc de cylindre de l'élément 115 de raideur est un cercle, un polygone ou une courbe ovoïde.

Un élément 115 de raideur comporte au moins une partie en tronc de cône. On rappelle qu'un cône est une surface réglée définie par une droite, appelée génératrice, passant par un point fixe, appelé sommet, et un point variable décrivant une courbe plane fermée, appelée courbe directrice.

Préférentiellement, l'élément 115 de raideur est constitué d'un tronc de cylindre juxtaposé avec un tronc de cône. Le tronc de cône est un cône de révolution. La courbe directrice du tronc de cône de l'élément 115 de raideur est identique à la courbe directrice du tronc de cylindre de l'élément 115 de raideur. La plus grande base du tronc de cône ainsi qu'une base du tronc de cylindre coïncident.

Préférentiellement, la courbe directrice du tronc de cône est un cercle et la courbe directrice du tronc de cylindre est un cercle.

Dans des modes de réalisation, l'élément 115 de raideur peut comporter au moins une section endommagée au préalable, par une ou plusieurs encoches. L'espace entre les encoches étant similaire, par exemple.

L'élément 110 de répartition comporte chaque élément 115 de raideur. Les éléments 115 de raideur sont répartis équitablement sur l'élément 110 de répartition. Préférentiellement, les éléments 115 de raideur sont parallèles entre eux, perpendiculaires à l'élément 110 de répartition et alignés sur une droite.

L'élément 110 de répartition est une plaque. Préférentiellement, chaque élément 115 de raideur est assemblé à l'élément 110 de répartition par injection RTM (acronyme de « Resin Transfer Molding » en terminologie anglo-saxonne). Préférentiellement, l'une des faces de l'élément 110 de répartition est coplanaire avec une face de l'enveloppe externe 100.

Préférentiellement, l'élément 110 de répartition est en :
- alliage de titane,
- alliage d'aluminium,
- composite PBO (p-phenylène-2,6-benzobisoxazole),
- composite Dyneema (marque déposée),
- composite polyéthylène,
- composite aramide,
- composite verre,
- autre composite ou,
- alliage de formage.

L'élément 110 de répartition peut comporter au moins deux éléments 115 de raideur de forme différentes ou de composition différentes.

Préférentiellement, l'élément 110 de répartition des charges mécaniques liées à la charge exceptionnelle est placé dans un endroit du dispositif 10 éloigné des endroits de l'enveloppe externe 100 où la réception d'une charge exceptionnelle est probable. L'élément 110 de répartition est interfacé à chaque élément 115 de raideur et adapte la déformation et/ou la rupture de l'enveloppe externe 100.

L'élément 120 de diffusion de la charge, sur le noyau, 105a et 105b, est une plaque. Préférentiellement, l'élément 120 de diffusion est en :
- alliage de titane,
- alliage d'aluminium,
- composite PBO (p-phenylène-2,6-benzobisoxazole),
- composite Dyneema (marque déposée),
- composite polyéthylène,
- composite aramide,
- composite verre,
- autre composite ou
- alliage de formage.

L'élément 120 de diffusion est placé perpendiculairement aux endroits de l'enveloppe externe 100 où la réception d'une charge exceptionnelle est probable. L'élément 120 de diffusion fait face à au moins deux éléments 110 de raideur.

Préférentiellement, l'élément 110 de répartition et l'élément 120 de diffusion sont parallèles.

L'élément 120 de répartition est compris entre une partie du noyau 105a et une partie du noyau 105b. Dans des modes de réalisation, l'élément de répartition 120 est coplanaire à l'enveloppe externe 100.

Lors d'une charge exceptionnelle, l'enveloppe externe 100, se déforme sous la charge. La charge est transmise à une partie du noyau 105b, qui se comprime au moins partiellement sous la charge. La charge arrivant sur l'élément 120 de diffusion est répartie sur une partie d'une face de l'élément 120 de diffusion. La charge diffusée est transmise à la partie du noyau 105a dans lequel sont placés les éléments 115 de raideur, répartis au moyen de l'élément 110 de répartition.

Les éléments 115 de raideur sont maintenus en position par la partie 105a du noyau et absorbent la charge résiduelle. L'extrémité de l'élément 115 de raideur concentre l'effort initial, d'autant plus si l'extrémité de l'élément 115 de raideur est le sommet d'un cône de révolution. La charge résiduelle est absorbée par au moins l'un des modes suivants:
- fragmentation ou rupture des fibres,
- décohésion inter-faciale, si l'élément 115 de raideur comporte un matériau de liaison,
- décohésion entre l'enveloppe tressée et les fibres,
- frottement entre les fibres de l'enveloppe tressée ou
- rupture par traction des fibres de l'enveloppe tressée.

Dans des modes de réalisation, la charge résiduelle est absorbée par plastification de clous en alliage de titane.

L'intégrité de la structure de l'enveloppe 100 externe est conservée.

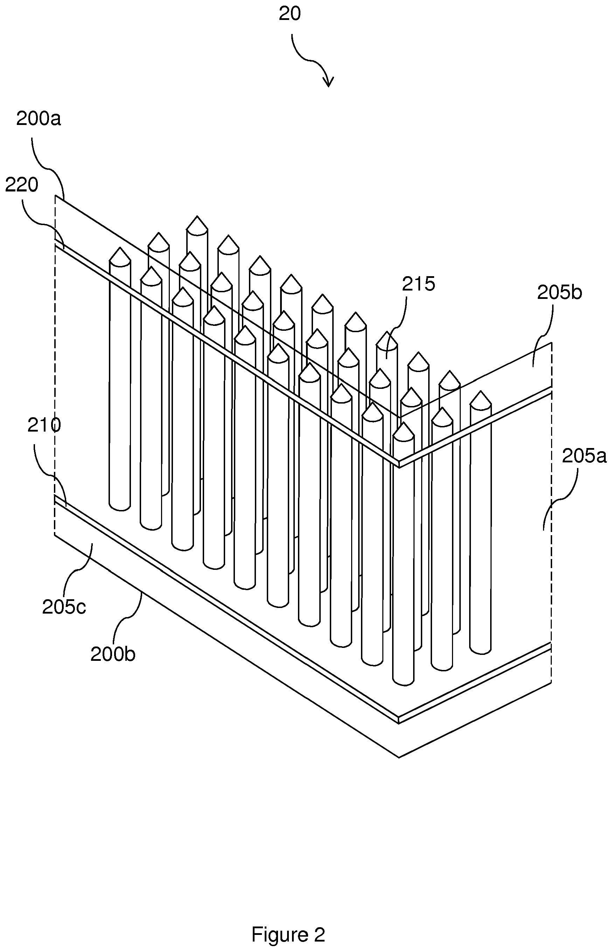

On observe sur la figure 2, un mode de réalisation 20 d'un dispositif objet de la présente invention.

Le dispositif 20 d'absorption d'énergie cinétique due à une charge exceptionnelle comporte :
- une enveloppe, 200a et 200b, externe configurée pour conserver une intégrité après la charge exceptionnelle,
- un noyau, 205a, 205b et 205c, en matériau compactable remplissant au moins partiellement l'enveloppe externe, le matériau du noyau, 205a, 205b et 205c, se compactant sous une charge de la charge exceptionnelle et absorbant une partie de l'énergie cinétique due à la charge,
- au moins un élément de raideur 215 intégré dans le noyau, 205a,
- un élément 210 de répartition comportant chaque élément de raideur 115 et
- un élément 220 de diffusion de la charge sur le noyau 105.

Lors d'une charge exceptionnelle, l'enveloppe externe, 200a et 200b, se déforme sans perdre son intégrité. Le matériau de l'enveloppe externe, 200a et 200b, a un comportement déformable. Préférentiellement, l'enveloppe externe, 200a et 200b, constitue une tresse de fibres composites. Les fibres composites sont du carbone, de l'aramide, de la fibre PBO (poly-phénylène-2,6-benzobisoxazole), de la fibre Dyneema (marque déposée), de la fibre polyéthylène, de la fibre de verre ou un mélange de fibres composites, par exemple. Le matériau de la partie 200a de l'enveloppe externe, 200a et 200b, peut être indépendant du matériau de la partie 200b de l'enveloppe externe, 200a et 200b.

Le noyau, 205a, 205b et 205c, peut comporter plusieurs parties. Par exemple, le noyau, 205a, 205b et 205c, comporte :
- une partie 205a en contact avec une face de l'élément 220 de diffusion, une face de l'élément 210 de répartition et au moins un élément 215 de raideur,
- une partie 205b en contact avec une autre face de l'élément 220 de diffusion et l'enveloppe externe 200a et
- une partie 205c en contact avec une face de l'élément 210 de répartition et l'enveloppe externe 200b. Le noyau, 205a, 205b et 205c, est compris dans l'enveloppe externe, 200a et 200b.

Le matériau du noyau, 205a, 205b et 205c, peut être :
- un matériau cellulaire,
- un matériau alvéolaire,
- une préforme fibreuse sèche,
- une préforme fibreuse partiellement imprégnée ou
- un matériau à plus faible résistance en compression que le matériau de l'enveloppe externe 200, par exemple.

Le matériau du noyau, 205a, 205b et 205c, peut être usinable ou mis en forme par moulage. Le matériau du noyau, 205a, 205b et 205c, peut avoir une densité variable. Chaque partie du noyau, 205a, 205b ou 205c, peut être en matériau différent avec des propriétés physiques différentes.

Préférentiellement, chaque élément de raideur 215 est mis en position dans le noyau, 205a, 205b et 205c, qui effectue le maintien en position des éléments de raideur.

Le noyau, 205a, 205b et 205c, peut comporter au moins un relief concave. Chaque relief concave correspond à un élément 215 de raideur.

Un élément 215 de raideur est préférentiellement un assemblage de fibres unidirectionnelles, maintenues par une enveloppe tressé. Dans des modes de réalisation, un élément 215 de raideur est un assemblage de clou en alliage de titane. Dans des modes de réalisation, l'assemblage de clous en alliage de titane d'un élément 115 de raideur est maintenu par une enveloppe tressée. La direction des fibres est préférentiellement dans le sens de la direction la plus grande de l'élément 215 de raideur. Préférentiellement, une fibre d'au moins un élément 215 de raideur est en matériau polymérisé durci, tel du carbone pultrudé par exemple. Les fibres comportées dans un élément 215 de raideur peuvent être de natures différentes. L'enveloppe tressée est préférentiellement une tresse de fibres de carbone, la résistance mécanique en traction de la tresse est donc élevée. Dans des modes de réalisation, l'enveloppe tressée est imprégnée de résine.

Un élément 215 de raideur peut comporter un matériau de liaison des fibres unidirectionnelles contenu dans l'enveloppe. Le matériau de liaison peut être une résine ou une mousse, par exemple. Le matériau de liaison peut être injecté selon le procédé RTM (acronyme de « Resin Transfer Molding » en terminologie anglo-saxone). Le matériau de liaison diminue la raideur de l'élément 215 de raideur et augmente la résistance au flambement lors d'une compression de l'élément 215 de raideur.

L'enveloppe tressée de l'élément 215 de raideur stabilise les fibres unidirectionnelles et résiste au flambement de l'élément 215 de raideur. Les fibres unidirectionnelles sont préférentiellement juxtaposées. La section des fibres est polygonale, circulaire ou ovoïde, par exemple. L'assemblage des fibres unidirectionnels de l'élément 215 de raideur peut être réalisé avec ou sans polymérisation.

Un élément 215 de raideur comporte au moins une partie en tronc de cylindre. On rappelle qu'un cylindre est une surface dans l'espace définie par une droite, appelée génératrice, passant par un point variable décrivant une courbe plane fermée, appelée courbe directrice, et gardant une direction fixe.

Préférentiellement, la courbe directrice du tronc de cylindre de l'élément 215 de raideur est un cercle, un polygone ou une courbe ovoïde.

Un élément 215 de raideur comporte au moins une partie en tronc de cône. On rappelle qu'un cône est une surface réglée définie par une droite, appelée génératrice, passant par un point fixe, appelé sommet, et un point variable décrivant une courbe plane fermée, appelée courbe directrice.

Préférentiellement, l'élément 215 de raideur est constitué d'un tronc de cylindre juxtaposé avec un tronc de cône. Le tronc de cône est un cône de révolution. La courbe directrice du tronc de cône de l'élément 215 de raideur est identique à la courbe directrice du tronc de cylindre de l'élément 215 de raideur. La plus grande base du tronc de cône ainsi qu'une base du tronc de cylindre coïncident. Préférentiellement, la courbe directrice du tronc de cône est un cercle et la courbe directrice du tronc de cylindre est un cercle.

Dans des modes de réalisation, l'élément 215 de raideur peut comporter au moins une section endommagée au préalable, par une ou plusieurs encoches. L'espace entre les encoches étant similaire, par exemple.

L'élément de répartition 210 comporte chaque élément 215 de raideur. Les éléments 215 de raideur sont répartis équitablement sur l'élément 210 de répartition. Préférentiellement, les éléments 215 de raideur sont parallèles entre eux, perpendiculaires à l'élément de répartition 210 et réparties sur un quadrillage.

L'élément de répartition 210 est une plaque. Préférentiellement, chaque élément 215 de raideur est assemblé sur l'élément 210 de répartition par injection RTM (acronyme de « Resin Transfer Molding » en terminologie anglo-saxonne) Préférentiellement, l'une des faces de l'élément 210 de répartition est parallèle avec une face de l'enveloppe externe.

Préférentiellement, l'élément de répartition 210 est en :
- alliage de titane,
- alliage d'aluminium,
- composite PBO (p-phenylène-2,6-benzobisoxazole),
- composite Dyneema (marque déposée),
- composite polyéthylène,
- composite aramide,
- composite verre,
- autre composite ou
- alliage de formage.

L'élément 210 de répartition peut comporter au moins deux éléments 215 de raideur de forme différentes ou de composition différentes.

Préférentiellement, l'élément 210 de répartition des charges mécaniques liées à la charge exceptionnelle est placé dans un endroit du dispositif 10 éloigné des endroits de l'enveloppe externe, 200a et 200b, où la réception d'une charge exceptionnelle est probable. L'élément 210 de répartition est interfacé à chaque élément 215 de raideur et adapte la déformation et/ou la rupture de l'enveloppe externe, 200a et 200b.

L'élément 220 de diffusion de la charge, sur le noyau, 205a, 205b et 205c, est une plaque. Préférentiellement, l'élément 120 de diffusion est en :
- alliage de titane,
- alliage d'aluminium,
- composite PBO (p-phenylène-2,6-benzobisoxazole),
- composite Dyneema (marque déposée),
- composite polyéthylène,
- composite aramide,
- composite verre,
- autre composite ou
- alliage de formage.

L'élément 220 de diffusion est placé perpendiculairement aux endroits de l'enveloppe externe 200a où la réception d'une charge exceptionnelle est probable. L'élément 220 de diffusion fait face à au moins deux éléments 210 de raideur.

Préférentiellement, l'élément 210 de répartition et l'élément 220 de diffusion sont parallèles.

L'élément 220 de diffusion est compris entre une partie du noyau 205a et une partie du noyau 205b. Dans des modes de réalisation, l'élément 220 de diffusion est coplanaire à l'enveloppe externe 200a.

Lors d'une charge exceptionnelle, l'enveloppe externe 200a, se déforme sous la charge. La charge est transmise à une partie du noyau 205b, qui se comprime au moins partiellement sous la charge. La charge arrivant sur l'élément 220 de diffusion est répartie sur une partie d'une face de l'élément 220 de diffusion. La charge diffusée est transmise à la partie du noyau 205a dans lequel sont placés les éléments 215 de raideur, répartis au moyen de l'élément de répartition 210.

Les éléments 215 de raideur sont maintenus en position par la partie 205a du noyau et absorbent la charge résiduelle. L'extrémité de l'élément 215 de raideur concentre l'effort initial, d'autant plus si l'extrémité de l'élément 215 de raideur est le sommet d'un cône de révolution. La charge résiduelle est absorbée par au moins l'un des modes suivants:
- fragmentation ou rupture des fibres,
- décohésion inter-faciale, si l'élément 210 de raideur comporte un matériau de liaison,
- décohésion entre l'enveloppe tressée et les fibres,
- frottement entre les fibres de l'enveloppe tressée ou
- rupture par traction des fibres de l'enveloppe tressée.

Dans des modes de réalisation, la charge résiduelle est absorbée par plastification de clous en alliage de titane.

L'intégrité de la structure de l'enveloppe, 200a et 200b, est conservée.

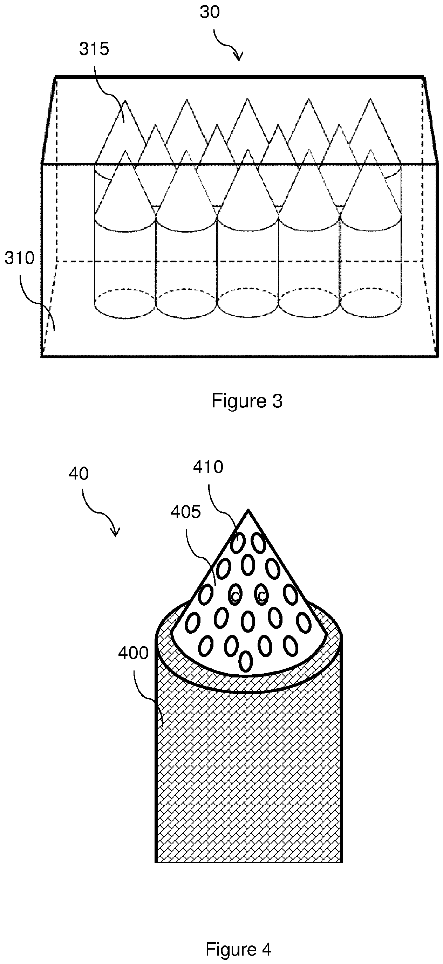

On observe sur la figure 3, une partie d'un mode de réalisation 30 d'un dispositif objet de la présente invention.

La partie du dispositif 30 d'absorption d'énergie cinétique due à une charge exceptionnelle représentée comporte :
- au moins un élément 315 de raideur et
- un élément 310 de répartition comportant chaque élément 315 de raideur.

Un élément 315 de raideur est préférentiellement un assemblage de fibres unidirectionnelles, maintenues par une enveloppe tressée. Dans des modes de réalisation, un élément 315 de raideur des un assemblage de clous en alliage de titane. Dans des modes de réalisation, l'assemblage de clous en alliage de titane d'un élément 315 de raideur est maintenu par une enveloppe tressée. La direction des fibres est préférentiellement dans le sens de la direction la plus grande de l'élément 315 de raideur. Préférentiellement, une fibre d'au moins un élément 315 de raideur est en matériau polymérisé durci, tel du carbone pultrudé par exemple. Les fibres comportées dans un élément 315 de raideur peuvent être de natures différentes. L'enveloppe tressée est préférentiellement une tresse de fibres de carbone, la résistance mécanique en traction de la tresse est donc élevée. Dans des modes de réalisation, l'enveloppe tressée est imprégnée de résine.

Un élément 315 de raideur peut comporter un matériau de liaison des fibres unidirectionnelles contenu dans l'enveloppe. Le matériau de liaison peut être une résine ou une mousse, par exemple. Le matériau de liaison peut être injecté selon le procédé RTM (acronyme de « Resin Transfer Molding » en terminologie anglo-saxone). Le matériau de liaison diminue la raideur de l'élément 315 de raideur et augmente la résistance au flambement lors d'une compression de l'élément 315 de raideur.

L'enveloppe tressée de l'élément 315 de raideur stabilise les fibres unidirectionnelles et résiste au flambement de l'élément 315 de raideur. Les fibres unidirectionnelles sont préférentiellement juxtaposées. La section des fibres est polygonale, circulaire ou ovoïde, par exemple. L'assemblage des fibres unidirectionnels de l'élément 315 de raideur peut être réalisé avec ou sans polymérisation.

Un élément 315 de raideur comporte au moins une partie est en tronc de cylindre. On rappelle qu'un cylindre est une surface dans l'espace définie par une droite, appelée génératrice, passant par un point variable décrivant une courbe plane fermée, appelée courbe directrice, et gardant une direction fixe.

Préférentiellement, la courbe directrice du tronc de cylindre de l'élément 315 de raideur est un cercle, un polygone ou une courbe ovoïde.

Un élément 315 de raideur comporte au moins une partie en tronc de cône. On rappelle qu'un cône est une surface réglée définie par une droite, appelée génératrice, passant par un point fixe, appelé sommet, et un point variable décrivant une courbe plane fermée, appelée courbe directrice.

Préférentiellement, l'élément 315 de raideur est constitué d'un tronc de cylindre juxtaposé avec un tronc de cône. Le tronc de cône est un cône de révolution. La courbe directrice du tronc de cône de l'élément 315 de raideur est identique à la courbe directrice du tronc de cylindre de l'élément 315 de raideur. La plus grande base du tronc de cône ainsi qu'une base du tronc de cylindre coïncident. Préférentiellement, la courbe directrice du tronc de cône est un cercle et la courbe directrice du tronc de cylindre est un cercle.

Dans des modes de réalisation, l'élément 315 de raideur peut comporter au moins une section endommagée au préalable, tels une ou plusieurs encoches. L'espace entre les encoches étant le même, par exemple.

L'élément de répartition 310 comporte chaque élément 315 de raideur. Les éléments 315 de raideur sont répartis équitablement sur l'élément 310 de répartition. Préférentiellement, les éléments 315 de raideur sont parallèles entre eux, perpendiculaires à l'élément de répartition 310 et réparties sur un quadrillage et en quinconce.

L'élément 310 de répartition est une plaque. Préférentiellement, chaque élément 315 de raideur est assemblé à l'élément 110 de répartition par injection RTM (acronyme de « Resin Transfer Molding » en terminologie anglo-saxonne). Préférentiellement, l'une des faces de l'élément 310 de répartition est coplanaire avec une face de l'enveloppe externe.

Préférentiellement, l'élément 310 de répartition est en :
- alliage de titane,
- alliage d'aluminium,
- composite PBO (p-phenylène-2,6-benzobisoxazole),
- composite Dyneema (marque déposée),
- composite polyéthylène,
- composite aramide,
- composite verre,
- autre composite ou
- alliage de formage.

L'élément 310 de répartition peut comporter au moins deux éléments 315 de raideur de forme différentes ou de composition différentes.

Dans des modes de réalisation, la répartition des éléments 315 de raideur au moyen de l'élément 310 de répartition est défini selon trois dimensions.

On observe sur la figure 4, un mode de réalisation particulier 40 d'un élément de raideur d'un dispositif objet de la présente invention,

Un élément 40 de raideur est préférentiellement un assemblage de fibres 410 unidirectionnelles comprises dans un matériau de liaison 405 et maintenues par une enveloppe 400 tressée. La direction des fibres 410 est préférentiellement dans le sens de la direction la plus grande de l'élément 40 de raideur.

Dans des modes de réalisation, un élément 40 de raideur est un assemblage de clous en alliage de titane. Dans des modes de réalisation, l'assemblage de clous en alliage de titane de l'élément 40 de raideur est maintenu per une enveloppe 400 tressée.

Préférentiellement, une fibre 410 de l'élément 40 de raideur est en matériau polymérisé durci, tel du carbone pultrudé par exemple. Les fibres 410 comportées dans l'élément 40 de raideur peuvent être de natures différentes. L'enveloppe 400 tressée est préférentiellement une tresse de fibres de carbone, la résistance mécanique en traction de la tresse est donc élevée. Dans des modes de réalisation, l'enveloppe 400 tressée est imprégnée de résine.

L'élément 40 de raideur comporte un matériau 405 de liaison des fibres unidirectionnelles contenu dans l'enveloppe. Le matériau 405 de liaison peut être une résine ou une mousse, par exemple. Le matériau 405 de liaison peut être injecté selon le procédé RTM (acronyme de « Resin Transfer Molding » en terminologie anglo-saxone). Le matériau 405 de liaison diminue la raideur de l'élément 40 de raideur et diminue la résistance au flambement lors d'une compression de l'élément 40 de raideur, par rapport à un élément de raideur 40 qui comporte uniquement des fibres 410 assemblée par une enveloppe tressée 400.

L'enveloppe 400 tressée de l'élément 40 de raideur stabilise les fibres 410 unidirectionnelles et résiste au flambement de l'élément 40 de raideur. Les fibres 410 unidirectionnelles sont préférentiellement juxtaposées. La section des fibres 410 est polygonale, circulaire ou ovoïde, par exemple. Préférentiellement, la section des fibres 410 est circulaire.

L'assemblage des fibres 410 unidirectionnels de l'élément 40 de raideur peut être réalisé avec ou sans polymérisation.

L'élément 40 de raideur comporte au moins une partie qui est en tronc de cylindre. On rappelle qu'un cylindre est une surface dans l'espace définie par une droite, appelée génératrice, passant par un point variable décrivant une courbe plane fermée, appelée courbe directrice, et gardant une direction fixe.

Préférentiellement, la courbe directrice du tronc de cylindre de l'élément 40 de raideur est un cercle, un polygone ou une courbe ovoïde.

L'élément 40 de raideur comporte au moins une partie en tronc de cône. On rappelle qu'un cône est une surface réglée définie par une droite, appelée génératrice, passant par un point fixe, appelé sommet, et un point variable décrivant une courbe plane fermée, appelée courbe directrice.

Préférentiellement, l'élément 40 de raideur est constitué d'un tronc de cylindre juxtaposé avec un tronc de cône. Le tronc de cône est un cône de révolution. La courbe directrice du tronc de cône de l'élément 40 de raideur est identique à la courbe directrice du tronc de cylindre de l'élément 40 de raideur. La plus grande base du tronc de cône ainsi qu'une base du tronc de cylindre coïncident. Préférentiellement, la courbe directrice du tronc de cône est un cercle et la courbe directrice du tronc de cylindre est un cercle.

Dans des modes de réalisation, l'élément 40 de raideur peut comporter au moins une section endommagée au préalable, tels une ou plusieurs encoches. L'espace entre les encoches étant le même, par exemple. Une fibre 410 de l'élément de raideur 40 peut comporter au moins une section endommagée au préalable, tels une ou plusieurs encoches, l'espace entre les encoches étant le même, par exemple.

Les modes de réalisation d'éléments de raideur, 115, 215 et 315, peuvent comporter un mode de réalisation 40 d'élément de raideur tel que décrit précédemment.

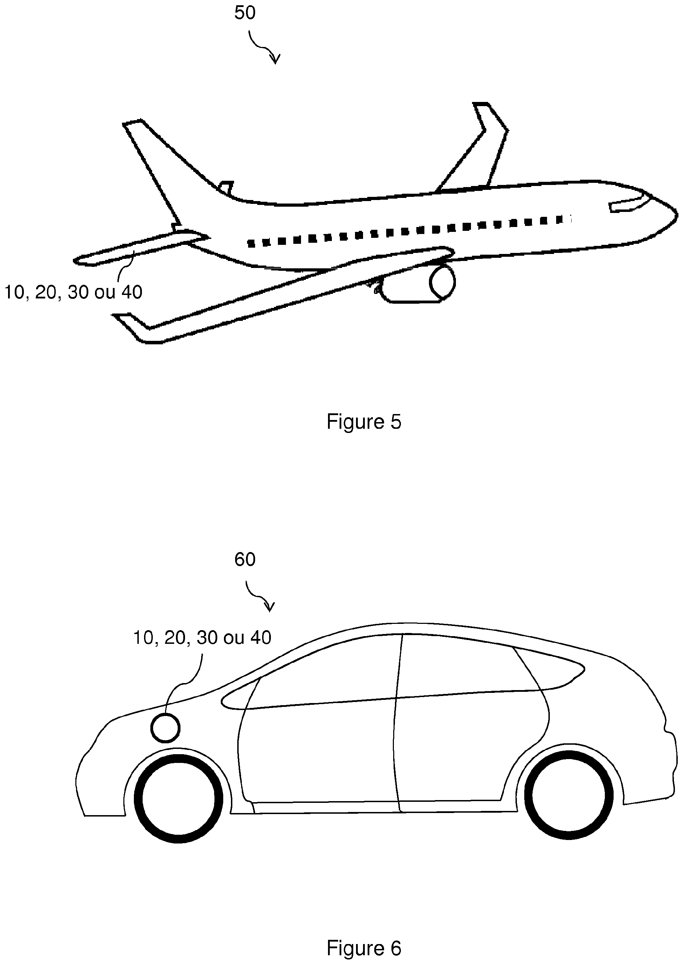

On observe sur la figure 5, un mode de réalisation 50 d'un aéronef objet de la présente invention.

L'aéronef 50 comporte un mode de réalisation 10, 20 d'un dispositif objet de la présente invention. Les modes de réalisation 10, 20 du dispositif objet de la présente invention peuvent comporter une partie 30, 40 d'un dispositif objet de la présente invention.

Le mode de réalisation 10 ou 20 peut être comportés par :
- au moins une partie du fuselage de l'aéronef 50,
- un bord d'attaque d'une voilure de l'aéronef 50,
- un empennage de l'aéronef 50,
- un mat d'un moteur de l'aéronef 50,
- un bord d'attaque d'une nacelle de l'aéronef 50,
- une pâle, une hélice, une aube d'un moteur de l'aéronef 50,
- une pointe avant de l'aéronef 50,
- toute autre partie de l'aéronef 50 susceptible de subir une charge exceptionnelle.

On observe sur la figure 6, un mode de réalisation 60 d'un véhicule objet de la présente invention.

Le véhicule 60 comporte un mode de réalisation 10, 20 d'un dispositif objet de la présente invention. Les modes de réalisation 10, 20 du dispositif objet de la présente invention peuvent comporter une partie 30, 40 d'un dispositif objet de la présente invention.

Le mode de réalisation 10 ou 20 peut être comportés par au moins une partie de la carrosserie du véhicule ou toute autre partie du véhicule susceptible de subir une charge exceptionnelle.

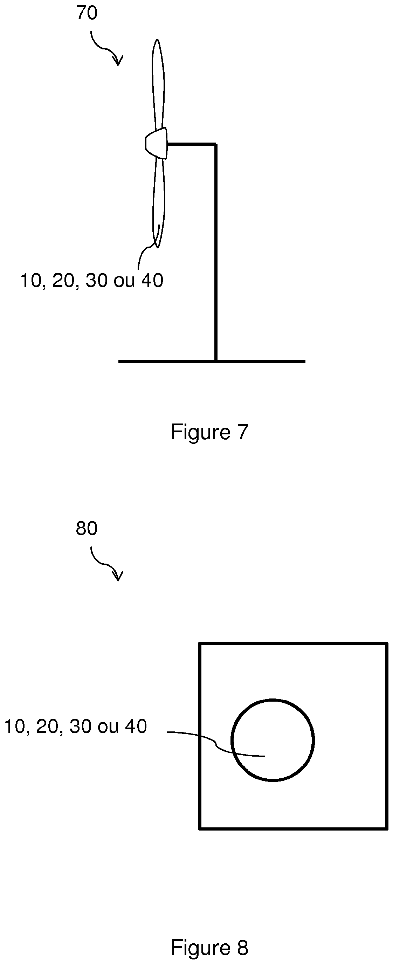

On observe sur la figure 7, un mode de réalisation 70 d'un équipement objet de la présente invention.

L'équipement 70 comporte un mode de réalisation 10, 20 d'un dispositif objet de la présente invention. Les modes de réalisation 10, 20 du dispositif objet de la présente invention peuvent comporter une partie 30, 40 d'un dispositif objet de la présente invention. L'équipement 70 peut être une éolienne, par exemple.

Le mode de réalisation 10 ou 20 peut être comportés par une partie mobile de l'équipement 70, une partie de la structure extérieure de l'équipement 70 ou toute autre partie de l'équipement 70 susceptible de subir une charge exceptionnelle.

On observe sur la figure 8, un mode de réalisation 80 d'une installation objet de la présente invention.

L'installation 80 comporte un mode de réalisation 10, 20 d'un dispositif objet de la présente invention. Les modes de réalisation 10, 20 du dispositif objet de la présente invention peuvent comporter une partie 30, 40 d'un dispositif objet de la présente invention. L'installation 80 est un dispositif de climatisation, par exemple.

Le mode de réalisation 10 ou 20 peut être comportés par une partie mobile de l'installation 80, une partie de la structure extérieure de l'installation 80 ou toute autre partie de l'installation 80 susceptible de subir une charge exceptionnelle.

## Revendications

1. Dispositif (10, 20) d'absorption d'énergie cinétique due à une charge exceptionnelle **caractérisé en ce qu'**il comporte :
- une enveloppe externe (100, 200a, 200b) configurée pour conserver une intégrité après la charge exceptionnelle,
- un noyau (105a, 105b, 205a, 205b, 205c) en matériau compactable remplissant au moins partiellement l'enveloppe externe, le matériau du noyau se compactant sous une charge exceptionnelle et absorbant une partie de l'énergie cinétique due à l'impact,
- au moins un élément (115, 215, 315, 40) de raideur intégré dans le noyau et
- un élément de répartition (110, 210, 310) comportant chaque élément de raideur
**caractérisé en ce que** au moins un élément (115, 215, 315, 40) de raideur est un assemblage de fibres (410) unidirectionnelles maintenues par une enveloppe (400) tressée.

2. Dispositif (10, 20) selon la revendication 1, qui comporte un élément de diffusion (120, 220) de la charge exceptionnelle sur le noyau.

3. Dispositif (10, 20) selon l'une des revendications 1 ou 2, dans lequel au moins un élément (115, 215, 315, 40) de raideur comporte un matériau (405) de liaison des fibres (410) unidirectionnelles.

4. Dispositif (10, 20) selon l'une des revendications 1 à 3, dans lequel au moins une fibre (410) d'au moins un élément (115, 215, 315, 40) de raideur est en matériau polymérisé durci.

5. Dispositif (10, 20) selon l'une des revendications 1 à 4, dans lequel au moins une partie d'au moins un élément (115, 215, 315, 40) de raideur est un tronc de cylindre.

6. Dispositif (10, 20) selon l'une des revendications 1 à5, dans lequel au moins une partie d'au moins un élément (115, 215, 315, 40) de raideur est un tronc de cône.

7. Dispositif (10, 20) selon l'une des revendications 1 à 6, dans lequel au moins un élément (115, 215, 315, 40) de raideur est intégré dans un relief concave comporté par le noyau (105a, 205a).

8. Dispositif (10, 20) selon l'une des revendications 1 à 7, dans lequel chaque élément (115, 215, 315, 40) de raideur est réparti équitablement par l'élément de répartition (110, 210, 310).

9. Dispositif (10, 20) selon l'une des revendications 1 à 8, dans lequel le matériau de l'élément de répartition (110, 210, 310) est compris dans le groupe comprenant :
- un alliage de titane,
- un alliage d'aluminium,
- un composite PBO (p-phenylène-2,6-benzobisoxazole),
- un composite Dyneema (marque déposée),
- un composite polyéthylène,
- un composite aramide,
- un composite verre ou,
- un autre composite.

10. Dispositif (10, 20) selon l'une des revendications 2 à 9, dans lequel le matériau de l'élément de diffusion (120, 220) est compris dans le groupe comprenant :
- un alliage de titane,
- un alliage d'aluminium,
- un composite PBO (p-phenylène-2,6-benzobisoxazole),
- un composite Dyneema (marque déposée),
- un composite polyéthylène,
- un composite aramide,
- un composite verre ou,
- un autre composite.

11. Aéronef (50) **caractérisé en ce qu'**il comporte un dispositif (10, 20) selon l'une des revendications 1 à 10.

12. Véhicule (60) **caractérisé en ce qu'**il comporte un dispositif (10, 20) selon l'une des revendications 1 à 10.

13. Equipement (70) **caractérisé en ce qu'**il comporte un dispositif (10, 20) selon l'une des revendications 1 à 10.

14. Installation (80) **caractérisée en ce qu'**elle comporte un dispositif (10, 20) selon l'une des revendications 1 à 10.

## Patentansprüche

1. Vorrichtung (10, 20) zur Absorption kinetischer Energie, die auf eine außergewöhnliche Belastung zurückzuführen ist, **dadurch gekennzeichnet, dass** sie umfasst:
- eine äußere Hülle (100, 200a, 200b), die dafür ausgelegt ist, nach der außergewöhnliche Belastung ihre Unversehrtheit zu bewahren,
- einen Kern (105a, 105b, 205a, 205b, 205c) aus verdichtungsfähigem Material, das die äußere Hülle wenigstens teilweise ausfüllt, wobei sich das Material des Kerns unter einer außergewöhnlichen Belastung verdichtet und einen Teil der auf den Aufprall zurückzuführenden kinetischen Energie absorbiert,
- wenigstens ein Versteifungselement (115, 215, 315, 40), das in den Kern integriert ist, und
- ein Verteilungselement (110, 210, 310), das jedes Versteifungselement umfasst,
**dadurch gekennzeichnet, dass** wenigstens ein Versteifungselement (115, 215, 315, 40) eine Anordnung von unidirektionalen Fasern (410) ist, die durch eine geflochtene Hülle (400) gehalten werden.

2. Vorrichtung (10, 20) nach Anspruch 1, welche ein Element zur Ausbreitung (120, 220) der außergewöhnlichen Belastung auf dem Kern umfasst.

3. Vorrichtung (10, 20) nach einem der Ansprüche 1 oder 2, wobei ein Versteifungselement (115, 215, 315, 40) ein Material (405) zur Verbindung der unidirektionalen Fasern (410) umfasst.

4. Vorrichtung (10, 20) nach einem der Ansprüche 1 bis 3, wobei wenigstens eine Faser (410) wenigstens eines Versteifungselements (115, 215, 315, 40) aus einem gehärteten polymerisierten Material besteht.

5. Vorrichtung (10, 20) nach einem der Ansprüche 1 bis 4, wobei wenigstens ein Teil wenigstens eines Versteifungselements (115, 215, 315, 40) ein schief abgeschnittener Zylinder ist.

6. Vorrichtung (10, 20) nach einem der Ansprüche 1 bis 5, wobei wenigstens ein Teil wenigstens eines Versteifungselements (115, 215, 315, 40) ein Kegelstumpf ist.

7. Vorrichtung (10, 20) nach einem der Ansprüche 1 bis 6, wobei wenigstens ein Versteifungselement (115, 215, 315, 40) in ein konkaves Relief integriert ist, das von dem Kern (105a, 205a) umfasst wird.

8. Vorrichtung (10, 20) nach einem der Ansprüche 1 bis 7, wobei alle Versteifungselemente (115, 215, 315, 40) durch das Verteilungselement (110, 210, 310) gleichmäßig verteilt sind.

9. Vorrichtung (10, 20) nach einem der Ansprüche 1 bis 8, wobei das Material des Verteilungselements (110, 210, 310) in der Gruppe enthalten ist, welche umfasst:
- eine Titanlegierung,
- eine Aluminiumlegierung,
- ein Verbundmaterial von PBO (Poly(p-phenylen-2,6-benzobisoxazol)),
- ein Verbundmaterial von Dyneema (eingetragene Marke),
- ein Polyethylen-Verbundmaterial,
- ein Aramid-Verbundmaterial,
- ein Glasverbundmaterial oder
- ein anderes Verbundmaterial.

10. Vorrichtung (10, 20) nach einem der Ansprüche 2 bis 9, wobei das Material des Ausbreitungselements (120, 220) in der Gruppe enthalten ist, welche umfasst:
- eine Titanlegierung,
- eine Aluminiumlegierung,
- ein Verbundmaterial von PBO (Poly(p-phenylen-2,6-benzobisoxazol)),
- ein Verbundmaterial von Dyneema (eingetragene Marke),
- ein Polyethylen-Verbundmaterial,
- ein Aramid-Verbundmaterial,
- ein Glasverbundmaterial oder
- ein anderes Verbundmaterial.

11. Luftfahrzeug (50), **dadurch gekennzeichnet, dass** es eine Vorrichtung (10, 20) nach einem der Ansprüche 1 bis 10 umfasst.

12. Fahrzeug (60), **dadurch gekennzeichnet, dass** es eine Vorrichtung (10, 20) nach einem der Ansprüche 1 bis 10 umfasst.

13. Einrichtung (70), **dadurch gekennzeichnet, dass** sie eine Vorrichtung (10, 20) nach einem der Ansprüche 1 bis 10 umfasst.

14. Anlage (80), **dadurch gekennzeichnet, dass** sie eine Vorrichtung (10, 20) nach einem der Ansprüche 1 bis 10 umfasst.

## Claims

1. Device (10, 20) for absorbing kinetic energy due to an exceptional load, **characterized in that** it comprises:
- an outer envelope (100, 200a, 200b) configured to retain its integrity after the exceptional load,
- a core (105a, 105b, 205a, 205b, 205c) made of compactable material at least partially filling the outer envelope, the material of the core becoming compacted under an exceptional load and absorbing a part of the kinetic energy due to the impact,
- at least one stiffening element (115, 215, 315, 40) integrated into the core, and
- a distribution element (110, 210, 310) comprising each stiffening element
**characterized in that** at least one stiffening element (115, 215, 315, 40) is an assembly of unidirectional fibres (410) held by a braided envelope (400).

2. Device (10, 20) according to Claim 1, which comprises an element (120, 220) for spreading the exceptional load over the core.

3. Device (10, 20) according to either of Claims 1 and 2, wherein at least one stiffening element (115, 215, 315, 40) comprises a material (405) for bonding the unidirectional fibres (410).

4. Device (10, 20) according to one of Claims 1 to 3, wherein at least one fibre (410) of at least one stiffening element (115, 215, 315, 40) is made of cured polymerized material.

5. Device (10, 20) according to one of Claims 1 to 4, wherein at least a part of at least one stiffening element (115, 215, 315, 40) is a truncated cylinder.

6. Device (10, 20) according to one of Claims 1 to 5, wherein at least a part of at least one stiffening element (115, 215, 315, 40) is a truncated cone.

7. Device (10, 20) according to one of Claims 1 to 6, wherein at least one stiffening element (115, 215, 315, 40) is integrated into a concave relief comprised in the core (105a, 205a).

8. Device (10, 20) according to one of Claims 1 to 7, wherein each stiffening element (115, 215, 315, 40) is distributed equally by the distribution element (110, 210, 310).

9. Device (10, 20) according to one of Claims 1 to 8, wherein the material of the distribution element (110, 210, 310) is included in the group comprising:
- a titanium alloy,
- an aluminium alloy,
- a PBO (p-phenylene-2,6-benzobisoxazole) composite,
- a Dyneema (registered trade mark) composite,
- a polyethylene composite,
- an aramid composite,
- a glass composite, or
- another composite.

10. Device (10, 20) according to one of Claims 2 to 9, wherein the material of the spreading element (120, 220) is included in the group comprising:
- a titanium alloy,
- an aluminium alloy,
- a PBO (p-phenylene-2,6-benzobisoxazole) composite,
- a Dyneema (registered trade mark) composite,
- a polyethylene composite,
- an aramid composite,
- a glass composite, or
- another composite.

11. Aircraft (50) **characterized in that** it comprises a device (10, 20) according to one of Claims 1 to 10.

12. Vehicle (60) **characterized in that** it comprises a device (10, 20) according to one of Claims 1 to 10.

13. Item of equipment (70) **characterized in that** it comprises a device (10, 20) according to one of Claims 1 to 10.

14. Installation (80) **characterized in that** it comprises a device (10, 20) according to one of Claims 1 to 10.
